# EUROPEAN PATENT SPECIFICATION

(11) **EP 3 392 467 B1**
(45) Date of publication and mention of the grant of the patent: **06.11.2024**
(21) Application number: 18167394.8
(22) Date of filing: 13.04.2018
(51) Int. Cl.: F01D 17/02, F02C 7/05, G01N 15/00, F01D 21/10

(54) **GAS TURBINE ENGINE PARTICULATE INGESTION DETECTION SYSTEM AND CORRESPONDING METHOD**
PARTIKELDETEKTIONSSYSTEM FÜR EIN GASTURBINENTRIEBWERK UND ZUGEHÖRIGES VERFAHREN
SYSTÈME DE DÉTECTION D'INGESTION DE PARTICULES DE MOTEUR DE TURBINE A GAZ ET PROCÉDÉ ASSOCIÉ

(30) Priority: 18.04.2017 US 201715490029
(43) Date of publication of application: 24.10.2018
(73) Proprietor: Honeywell International Inc., Charlotte, NC 28202 (US)
(72) Inventor: DISCHINGER, Dave, Morris Plains, NJ New Jersey 07950 (US); NOLCHEFF, Nick, Morris Plains, NJ New Jersey 07950 (US)
(74) Representative: LKGlobal UK Ltd.

(56) References cited:
- EP-A1- 3 061 691
- EP-A1- 3 301 397
- EP-A2- 2 305 958
- EP-A2- 2 538 199
- WO-A1-2015/034513

## Description

### TECHNICAL FIELD

The present invention generally relates to gas turbine engines, and more particularly relates to a system and method for sensing ice particulate ingestion and accumulation.

### BACKGROUND

Aircraft turbine engines, such as a turbofan gas turbine engine, may be exposed to numerous and varied environmental conditions both on the ground and in flight. For example, the engine may be exposed to supercooled liquid droplets, ice crystals, sand, dust, or volcanic ash. Such exposure may result in accumulation of ice or other particulate at various locations on or within the engine. Not surprisingly, such accumulation can adversely affect engine performance and/or have various other deleterious effects on engine components.

Presently, most aircraft engines are not equipped with systems that can differentiate between different types of particulate, let alone the quantity and size of the particulate. Knowing the type, quantity, and size of the particulate at various locations within the engine could be useful in determining if, and how much, particulate is accumulating at various locations on or within the engine.

Hence, there is a need for a system and method for sensing particulate ingestion and accumulation at one or more locations within a gas turbine engine. The present invention addresses at least this need.
Patent Application Publication No. EP3301397 describes sensors monitoring environmental conditions and deformation of aircraft surfaces, and generating an alert when necessary.
Patent Application Publication No. EP 2305958 describes analyzing the sounds of impacts of particles on a surface of a gas turbine engine, comparing them to a store of sounds, and adjusting operation of the engine if necessary.
Patent Application Publication No. EP 2538199 describes debris monitoring in a gas turbine engine by continuous sensing of particulates. The time-domain sensor signal is Fourier transformed to a frequency domain signal.
Patent Application Publication EP 3 061 691 A1 describes an anti-icing system for a gas turbine engine.

### BRIEF SUMMARY

The present invention is defined by the appended claims. This summary is provided to describe select concepts in a simplified form that are further described in the Detailed Description. This summary is not intended to identify key or essential features of the claimed subject matter, nor is it intended to be used as an aid in determining the scope of the claimed subject matter.

According to a first aspect, there is provided a gas turbine engine ice particulate ingestion detection system includes a first particulate sensor, a second particulate sensor, and a processor. The first particulate sensor is mounted at a first position on the gas turbine engine, where the first position is located upstream of a gas turbine engine component. The first particulate sensor is configured to sense particulate at the first position and supply a first sensor signal representative thereof. The second particulate sensor is mounted at a second position on the gas turbine engine, where the second position is located downstream of the gas turbine engine component and the first position. The second particulate sensor is configured to sense ice particles at the second position and supply a second sensor signal representative thereof. The processor is coupled to receive the first sensor signal and the second sensor signal. The processor is configured, upon receipt of the first and second sensors signal, to: (i) determine the quantity and size of the ice particles at the first position, (ii) determine the quantity and size of the ice particles at the second position, and (iii) determine, based at least on the quantity and size of the ice particles at the first and second positions, an amount of ice accumulated on the gas turbine engine component; to compare the amount of ice accumulated on the gas turbine engine component to a threshold value; and to generate a signal when the amount exceeds the threshold value, where the gas turbine engine component is a fan and where the first and second sensors are each optical sensors.

According to a second aspect, there is provided a method for determining particulate accumulation in a gas turbine engine, where the particulate is frozen ice particles. The method includes the steps of sensing ice particles at a first position on the gas turbine engine and supplying a first sensor signal representative thereof, where the first position is located upstream of a gas turbine engine component, and sensing ice particles at a second position on the gas turbine engine and supplying a second sensor signal representative thereof, where the second position is located downstream of the gas turbine engine component and the first position. The first sensor signal is processed to determine the quantity, and size of the ice particles at the first position, and the second sensor signal is processed to determine the quantity, and size of the ice particles at the second position. Based at least on the quantity and size of the ice particles at the first and the second positions, an amount of ice particles accumulated on the gas turbine engine component is determined. The amount of ice accumulated on the gas turbine engine component is compared to a threshold value. A signal is generated when the amount exceeds the threshold value. The first and second sensors are each optical sensors, and the gas turbine engine component is a fan.

Furthermore, other desirable features and characteristics of the particulate ingestion and accumulation system and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a simplified functional diagram of one embodiment of an engine control system for an aircraft; and.
FIG. 2 depicts a process, in flowchart form, that may be implemented in the system depicted in FIG. 1.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

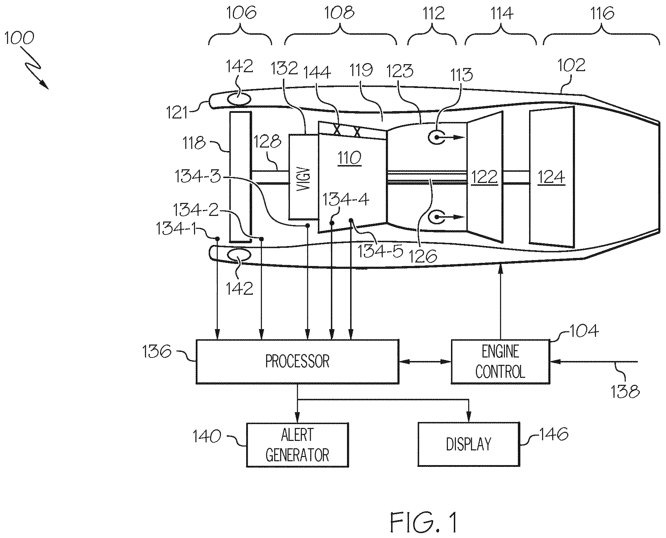

Referring to FIG. 1, a simplified functional diagram of an exemplary engine system 100 for an aircraft is depicted and includes a turbofan gas turbine engine 102 and an engine control 104. In the depicted embodiment, the turbofan gas turbine engine 102 is implemented as multi-spool gas turbine engine and, as FIG. 1 further depicts, each includes an intake section 106, a compressor section 108, a combustion section 112, a propulsion turbine 114, and an exhaust section 116. The intake section 106 includes a fan 118, which draws air into the intake section 106. A fraction of the air exhausted from the fan 118 is directed through a bypass section 119 disposed between a fan case 121 and an engine cowl 123, and provides a forward thrust. The remaining fraction of air exhausted from the fan 118 is directed into the compressor section 108.

The compressor section 108, which may include one or more compressors, raises the pressure of the air directed into it from the fan 118, and directs the compressed air into the combustion section 112. In the depicted embodiment, only a single compressor 110 is shown, though it will be appreciated that one or more additional compressors could be used. In the combustion section 112, which includes a combustor assembly 113, the compressed air is mixed with fuel supplied from a non-illustrated fuel source. The fuel and air mixture is combusted, and the high energy combusted air mixture is then directed into the propulsion turbine 114.

The propulsion turbine 114 includes one or more turbines. In the depicted embodiment, the propulsion turbine 114 includes two turbines, a high pressure turbine 122, and a low pressure turbine 124. However, it will be appreciated that the propulsion turbine 114 could be implemented with more or less than this number of turbines. No matter the particular number, the combusted air mixture from the combustion section 112 expands through each turbine 122, 124, causing it to rotate. The combusted air mixture is then exhausted through the exhaust section 116 providing additional forward thrust.

As the turbines 122 and 124 rotate, each drives equipment in the engine 102 via concentrically disposed shafts or spools. Specifically, the high pressure turbine 122 drives the compressor 110, via a high pressure spool 126, at a rotational speed that is generally referred to as core engine speed (N2). The low pressure turbine 124 drives the fan 118, via a low pressure spool 128, at a rotational speed that is generally referred to as fan speed (N1). Though not included in the depicted embodiment, it will be appreciated that in some embodiments the engine 102 may include a reduction gearbox between the low pressure turbine 124 and the fan 118.

The engine control 104 is in operable communication with, and is configured to control the operation of the engine 102. In the depicted embodiment, the engine control 104 is configured, in response to a throttle setting 138, to control the flow of fuel to, and thus the power generated by, the engine 102. The engine control 104 is also configured to control the positions of one or more variable geometry devices, such as, for example, variable inlet guide vanes 132.

As FIG. 1 further depicts, the depicted engine system 100 also includes a plurality of particulate sensors 134 and a processor 136. The sensors 134 are each disposed at different positions on (or within) the gas turbine engine 102, and each sensor 134 is configured to sense particulate at its disposed position. In the depicted embodiment, the engine system 100 includes five particulate sensors disposed at five different locations. It will be appreciated that this is merely exemplary of one embodiment, and that the engine system 100 could be implemented with more or less than this number of particulate sensors 134. According to the invention, the particulate sensors 134 are implemented using optical sensors. Other examples of particulate sensors 134 include capacitive sensors, electrostatic sensors, lidar sensors, and backscatter sensors, just to name a few. It will additionally be appreciated that the type of particulate that each sensor 134 is configured to sense may vary. According to the invention, the sensors 134 are configured to sense ice particles. Other examples of types of particulate include dust and volcanic ash, just to name a few.

Regardless of the total number and specific type of sensors 134 that are used, the engine system 100 includes at least a first particulate sensor 134-1 and a second particulate sensor 134-2. The first particulate sensor 134-1 is mounted at a first position on the gas turbine engine 102, and the second particulate sensor 134-2 is mounted at a second position on the gas turbine engine 102. It is seen that the first position is located at a first side of a gas turbine engine component, and the second position is located at a second side of the gas turbine engine component and downstream of the first position. Thus, the first particulate sensor 134-1 senses particulate at the first position and supplies a first sensor signal representative thereof, and the second particulate sensor 134-2 senses particulate at the second position and supplies a second sensor signal representative thereof. Although the particular gas turbine engine component may vary, in the depicted embodiment it is the fan 118.

The processor 136 is coupled to receive the first sensor signal and the second sensor signal. The processor 136 is configured, upon receipt of the first and second sensor signals, to determine the type, quantity, and size of the particulate at the first and second positions. The processor 136 is additionally configured to determine, based at least on the quantity and size of the particulate at the first and second positions, the amount of particulate that has accumulated on the gas turbine engine component (e.g., the fan 118). It will be appreciated that the type of particulate accumulated on the gas turbine engine component may, at least in some embodiments, different from the type of particulate sensed at the first and second positions. Thus, for example, when the sensors 134 are configured to sense super-cooled water droplets and/or ice crystals, the processor 136 may determine the amount of ice that has accreted on the gas turbine engine component. As an example not according to the present invention, if the sensors 134 were to be configured to sense dust or volcanic ash, the processor 136 may determine the amount of dust or ash (which may be solidified into glass) that has accumulated on the gas turbine engine component.

In addition to determining the amount of the particulate that has accumulated on the gas turbine engine component, the processor is further configured to compare the amount of accumulated particulate to a threshold value. This threshold value may vary and may depend, for example, on the type of particulate being sensed, on the type of engine, and on the particular engine component. In any case, when the processor 136, based on this comparison, determines that the accumulated amount exceeds the threshold value, the processor 136 generates a signal. This signal may be used to generate an alert, to initiate a mitigation or corrective action, or both.

When the signal is used to generate an alert, then the system 100 additionally includes an alert generator 140. The alert generator 140 may be implemented as a visual alert, an aural alert, a haptic alert, or any one of numerous combination of these types of alerts. No matter how it is implemented, the alert generator 140 is coupled to receive the signal from the processor 136 and is configured, upon receipt of the signal, to generate an alert. The alert may communicate, for example, the type of particulate accumulated, which may in turn be used to determine a type of mitigation or corrective action to pursue.

When the signal is used to initiate a mitigation or corrective action, the signal may be supplied to one or more of the engine control 104, one or more anti-ice heaters 142, one or more controllable bypass channels (or valves) 144, and one or more display devices 146. The specific mitigation or corrective action, as may be appreciated, may be a function of the particular type of accumulated particulate, and preferably results in preventing or mitigating further particulate accumulation. As noted above, the engine control 104 is configured to, among other things, control at least the rotational speed of one or more of the gas turbine engine components. In some embodiments, the engine control 104 is further configured, upon receipt of the signal from the processor 136, to increase the rotational speed of one or more of the gas turbine components. This increase in speed will force a shed of the accumulated particulate and/or increase the temperature of the gas turbine engine component. In some embodiments, the engine control 104 may also be configured, upon receipt of the signal, to vary the positons of the one or more variable geometry devices (e.g., the variable inlet guide vanes 132). When the signal is supplied to the anti-ice heaters 142, the heaters 142, upon receipt of the signal, will generate heat.

The signal from the processor 136 may also be used to open one or more of the controllable bypass channels 144. The signal may be supplied directly to the controllable bypass channels 144 or to the engine control 104, which in turn opens the channels. Regardless, opening the bypass channels 144 will provide a flow path from the compressor 110 to the bypass section 119, which will exhaust particulate along the compressor outer diameter flow path out to the bypass section 119, thereby bypassing the combustor 113 and turbines 122, 124. When the signal is supplied to the one or more display devices 146, the display device 146 render, for example, a message to change the route or altitude of the vehicle (e.g., aircraft), to thereby exit the particulate source. It will be appreciated that the message may also, or instead, be supplied by the alert generator.

As was previously noted, the engine system 100 may include additional sensors. Indeed, in the depicted embodiment, the engine system 100 includes three additional particulate sensors 134 disposed at three different additional locations. More specifically, in addition to the first and second particulate sensors 134-1, 134-2, the depicted system 100 includes a third particulate sensor 134-3, a fourth particulate sensor 134-4, and a fifth particulate sensor 134-5.

The third particulate sensor 134-3 is mounted at a third position on the gas turbine engine 102, the fourth particulate sensor 134-4 is mounted at a fourth position on the gas turbine engine 102, and the fifth particulate sensor 134-5 is mounted at a fifth position on the gas turbine engine 102. Here, the third position is located at a first side of a second gas turbine engine component and downstream of the second position, and the fourth position is located at a second side of the second gas turbine engine component and downstream of the third position. In this embodiment, the second side of the second gas turbine engine component corresponds to the first side of a third gas turbine engine component, and the fifth position is located at the second side of the third gas turbine engine component and downstream of the fourth position. Although the second and third gas turbine engine components may vary, in the depicted embodiment each is a different stage (e.g., the first and second stages) of the compressor 110.

The third particulate sensor 134-3 senses particulate at the third position and supplies a third sensor signal representative thereof to the processor 136, the fourth particulate sensor 134-4 senses particulate at the fourth position and supplies a fourth sensor signal representative thereof to the processor 136, and the fifth particulate sensor senses particulate at the fifth position and supplies a fifth sensor signal representative thereof to the processor 136.

The processor 136, upon receipt of the additional sensor signals, determines the type, quantity, and size of particulate at the different positions. The processor 136 additionally determines, based at least on the quantity and size of particulate at each of the different positions, the amount of particulate accumulated on one or more additional gas turbine engine components (e.g., the first and second compressor stages).

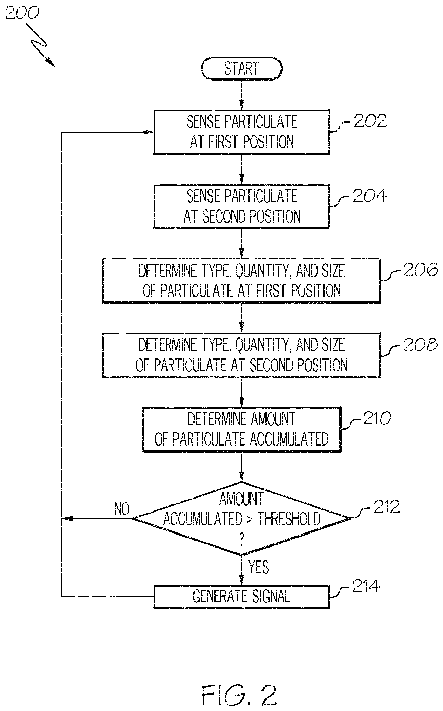

One embodiment of a process for determining particulate accumulation in the gas turbine engine 102 that the system 100 implements is depicted, in flowchart form, in FIG. 2, and will now be described. Before proceeding, it is noted that the depicted process 200 is when the system 100 includes only two particulate sensors 134 (e.g., the first and second particulate sensors), but could readily be expanded for a system that includes three or more sensors 134.

The process begins by sensing particulate at a first position on the gas turbine engine and supplying a first sensor signal representative thereof (202), and sensing particulate at a second position on the gas turbine engine and supplying a second sensor signal representative thereof (204). As noted above, the first position is located at a first side of a gas turbine engine component, and the second position is located at a second side of the gas turbine engine component and downstream of the first position. The first sensor signal is processed to determine the type, quantity, and size of the particulate at the first position (206), and the second sensor signal is processed to determine type, quantity, and size of the particulate at the second position (208).

After the type, quantity, and size of the particulate at the first and second locations are determined, the amount of particulate accumulated on the gas turbine engine component is then determined (210). As previously noted, this determination is based at least on the quantity and size of particulate at the first and the second positions. The amount of particulate accumulated on the gas turbine engine component is then compared to a threshold value (212). If the amount exceeds the threshold value, then an alert is generated (214). If not, then the process 200 repeats. Though not depicted in FIG. 2, it will be appreciated that the process 200 may be further expanded to include, for example, communicating the type of particulate accumulated on the gas turbine engine component, and/or initiating one or more mitigation or corrective actions.

The systems and methods described herein differentiate between different types, quantities, and sizes of particulate at various locations within a gas turbine engine, which allows determining if, and how much, particulate is accumulating at various locations on or within the engine.

In one embodiment, a gas turbine engine particulate ingestion detection system includes a first particulate sensor, a second particulate sensor, and a processor. The first particulate sensor is mounted at a first position on the gas turbine engine, where the first position is located upstream of a gas turbine engine component. The first particulate sensor is configured to sense particulate at the first position and supply a first sensor signal representative thereof. The second particulate sensor is mounted at a second position on the gas turbine engine, where the second position is located downstream of the gas turbine engine component and downstream of the first position. The second particulate sensor is configured to sense particulate at the second position and supply a second sensor signal representative thereof. The processor is coupled to receive the first sensor signal and the second sensor signal. The processor is configured, upon receipt of the first and second sensors signal, to: (i) determine the type, quantity, and size of the particulate at the first position, (ii) determine the type, quantity, and size of the particulate at the second position, and (iii) determine, based at least on the quantity and size of the particulate at the first and second positions, an amount of particulate accumulated on the gas turbine engine component.

These aspects and other embodiments may include one or more of the following features. The processor may be further configured to compare the amount of the particulate accumulated on the gas turbine engine component to a threshold value, and generate a signal when the amount exceeds the threshold value. The threshold value may depend on one or more of: the one or more types of particulate being sensed, the type of engine, and the particular engine component. An alert generator may coupled to receive the signal from the processor and configured, upon receipt of the signal, to generate an alert. The alert may communicate the type of particulate accumulated on the gas turbine engine component. The signal may initiate one or more actions to prevent or mitigate further particulate accumulation. The one or more actions may include one or more of: increasing the rotational speed of one or more gas turbine engine components; varying positons of one or more variable geometry devices; energizing one or more heaters; opening one or more compressor bypass channels; and displaying one or more messages to exit a source of the particulate. The particulate may comprise one or more of super-cooled water droplets, ice crystals, dust, and volcanic ash. The first and second sensors may each be selected from the group consisting of an optical sensor, a capacitive sensor, an electrostatic sensor, a lidar sensor, and a backscatter sensor. The system may further include a plurality of additional particulate sensors, where each additional particulate sensor is mounted at different positions on the gas turbine engine that are each different from the first and second positions, and each additional particulate sensor is configured to sense particulate at its position and supply an additional sensor signal representative thereof, and the processor may be further coupled to receive each of the additional sensor signals, and further configured, upon receipt of the additional sensors signal, to: determine type, quantity, and size of particulate at the different positions, and determine, based at least on the quantity and size of particulate at each of the different positions, an amount of the particulate accumulated on one or more additional gas turbine engine components. T\he first turbine engine component may be a fan, and the additional turbine engine components may include a first compressor stage and a second compressor stage.

In another embodiment, a method for determining particulate accumulation in a gas turbine engine includes sensing particulate at a first position on the gas turbine engine and supplying a first sensor signal representative thereof, where the first position is located upstream of a gas turbine engine component, and sensing particulate at a second position on the gas turbine engine and supplying a second sensor signal representative thereof, where the second position is located downstream of the gas turbine engine component and downstream of the first position. The first sensor signal is processed to determine the type, quantity, and size of the particulate at the first position, and the second sensor signal is processed to determine the type, quantity, and size of the particulate at the second position. Based at least on the quantity and size of the particulate at the first and the second positions, an amount of the particulate accumulated on the gas turbine engine component is determined.

These aspects and other embodiments may include one or more of the following features. Comparing the amount of the particulate accumulated on the gas turbine engine component to a threshold value, and generating an alert when the amount exceeds the threshold value. The threshold value may depend on one or more of: the one or more types of particulate being sensed, the type of engine, and the particular engine component. The alert may communicate the type of particulate accumulated on the gas turbine engine component. One or more actions to prevent or mitigate further particulate accumulation may be initiated. The one or more actions may include one or more of: increasing the rotational speed of one or more gas turbine engine components; varying positons of one or more variable geometry devices; energizing one or more heaters; opening one or more compressor bypass channels; and displaying one or more messages to exit a source of the particulate. The particulate may comprise one or more of super-cooled water droplets, ice crystals, dust, and volcanic ash. Sensing particulate at a plurality of positions in the gas turbine engine that are each different from the first and second positions, and supplying a plurality of additional sensor signals. Processing each of the additional sensor signals to determine type, quantity, and size of particulate at the different positions, and determining, based at least on the quantity and size of particulate at each of the different positions, an amount of the particulate accumulated on one or more additional gas turbine engine components.

In yet another embodiment, a gas turbine engine particulate ingestion detection system, wherein the particulate is one or both of super cooled liquid droplets and frozen ice particles, includes a first particulate sensor, a second particulate sensor, and a processor. The first particulate sensor is mounted at a first position on the gas turbine engine, where the first position located at a first side upstream of a gas turbine engine component. The first particulate sensor is configured to sense particulate at the first position and supply a first sensor signal representative thereof. The second particulate sensor is mounted at a second position on the gas turbine engine, where the second position located downstream of the gas turbine engine component and downstream of the first position. The second particulate sensor is configured to sense particulate at the second position and supply a second sensor signal representative thereof. The processor is coupled to receive the first sensor signal and the second sensor signal, and is configured, upon receipt of the first and second sensors signal, to: (i) determine the type, quantity, and size of the particulate at the first position, (ii) determine the type, quantity, and size of the particulate at the second position, (iii) determine, based at least on the quantity and size of the particulate at the first and second positions, an amount of ice accreted on the gas turbine engine component, (iv) compare the amount of ice accreted on the gas turbine engine component to a threshold value, and (v) generate a signal when the amount exceeds the threshold value.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A gas turbine engine particulate ingestion detection system (100), wherein the particulate is frozen ice particles, comprising:
a first particulate sensor (134-1) mounted at a first position on the gas turbine engine (102), the first position located upstream of a gas turbine engine component (118), the first particulate sensor configured to sense ice particles at the first position and supply a first sensor signal representative thereof;
a second particulate sensor (134-2) mounted at a second position on the gas turbine engine, the second position located downstream of the gas turbine engine component (118) and the first position, the second particulate sensor configured to sense ice particles at the second position and supply a second sensor signal representative thereof; and
a processor (136) coupled to receive the first sensor signal and the second sensor signal, the processor configured, upon receipt of the first and second sensors signal, to:
determine quantity and size of the ice particles at the first position;
determine quantity and size of the ice particles at the second position;
determine, based at least on the quantity and size of the ice particles at the first and second positions, an amount of ice accumulated on the gas turbine engine component;
compare (212) the amount of ice accumulated on the gas turbine engine component to a threshold value; and
generate (214) a signal when the amount exceeds the threshold value;
wherein the gas turbine engine component is a fan (118); and
wherein the first and second sensors are each optical sensors.

2. The system of claim 1, further comprising:
an alert generator (140) coupled to receive the signal from the processor and configured, upon receipt of the signal, to generate an alert.

3. The system of claim 1, wherein the signal initiates one or more actions to prevent or mitigate further particulate accumulation.

4. The system of claim 3, wherein the one or more actions include one or more of:
increasing the rotational speed of one or more gas turbine engine components;
varying positons of one or more variable geometry devices;
energizing one or more heaters;
opening one or more compressor bypass channels; and
displaying one or more messages to exit a source of the particulate.

5. The system of claim 1, further comprising:
a plurality of additional particulate sensors (134-3, 134-4, 134-5), each additional particulate sensor mounted at different positions on the gas turbine engine that are each different from the first and second positions, each additional particulate sensor configured to sense ice particles at its position and supply an additional sensor signal representative thereof,
wherein the processor is further coupled to receive each of the additional sensor signals, and is further configured, upon receipt of the additional sensors signal, to:
determine quantity and size of the ice particles at the different positions, and
determine, based at least on quantity and size of ice particles at each of the different positions, an amount of the ice particles accumulated on one or more additional gas turbine engine components.

6. The system of claim 5, wherein:
the additional turbine engine components include a first compressor stage and a second compressor stage.

7. A method (200) for determining particulate accumulation in a gas turbine engine (102), wherein the particulate is frozen ice particles, the method comprising the steps of:
sensing (202) ice particles at a first position on the gas turbine engine and supplying a first sensor signal representative thereof, the first position located upstreamof a gas turbine engine component;
sensing (204) ice particles at a second position on the gas turbine engine and supplying a second sensor signal representative thereof, the second position located downstream of the gas turbine engine component andthe first position;
processing the first sensor signal to determine (206) quantity and size of the ice particles at the first position;
processing the second sensor signal to determine (208) quantity and size of the ice particles at the second position;
determining (210), based at least on the quantity and size of the ice particles at the first and the second positions, an amount of the ice particles accumulated on the gas turbine engine component;
comparing (212) the amount of ice accumulated on the gas turbine engine component to a threshold value; and
generating (214) a signal when the amount exceeds the threshold value;
wherein the first and second sensors are each optical sensors; and
wherein the gas turbine engine component is a fan (118).

## Patentansprüche

1. Partikeleinsaugdetektionssystem (100) für ein Gasturbinentriebwerk, wobei die Partikel gefrorene Eisteilchen sind, umfassend:
einen ersten Partikelsensor (134-1), der an einer ersten Position an dem Gasturbinentriebwerk (102) angebracht ist, wobei sich die erste Position vorgelagert zu einer Gasturbinentriebwerkskomponente (118) befindet, wobei der erste Partikelsensor dazu konfiguriert ist, Eisteilchen an der ersten Position zu erfassen und ein erstes dafür charakteristisches Sensorsignal zu liefern;
einen zweiten Partikelsensor (134-2), der an einer zweiten Position an dem Gasturbinentriebwerk angebracht ist, wobei sich die zweite Position nachgelagert zu der Gasturbinentriebwerkskomponente (118) und zu der ersten Position befindet, wobei der zweite Partikelsensor dazu konfiguriert ist, Eisteilchen an der zweiten Position zu erfassen und ein zweites dafür charakteristisches Sensorsignal zu liefern; und
einen Prozessor (136), der dazu gekoppelt ist, das erste Sensorsignal und das zweite Sensorsignal zu empfangen, wobei der Prozessor dazu konfiguriert ist, bei Empfang des ersten und des zweiten Sensorsignals:
Menge und Größe der Eisteilchen an der ersten Position zu bestimmen;
Menge und Größe der Eisteilchen an der zweiten Position zu bestimmen;
auf Basis mindestens der Menge und Größe der Eisteilchen an der ersten und der zweiten Position einen Betrag von Eis zu bestimmen, das sich auf der Gasturbinentriebwerkskomponente angesammelt hat;
den Betrag des Eises, das sich auf der Gasturbinentriebwerkskomponente angesammelt hat, mit einem Schwellenwert zu vergleichen (212); und
ein Signal zu erzeugen (214), wenn der Betrag den Schwellenwert überschreitet;
wobei die Gasturbinentriebwerkskomponente ein Gebläse (118) ist; und
wobei der erste und der zweite Sensor jeweils optische Sensoren sind.

2. System nach Anspruch 1, ferner umfassend:
einen Alarmerzeuger (140), der dazu gekoppelt ist, das Signal von dem Prozessor zu empfangen, und der dazu konfiguriert ist, bei Empfang des Signals einen Alarm zu erzeugen.

3. System nach Anspruch 1, wobei das Signal eine oder mehrere Maßnahmen auslöst, um eine weitere Partikelansammlung zu verhindern oder abzuschwächen.

4. System nach Anspruch 3, wobei die eine oder die mehreren Maßnahmen eines oder mehrere aus Folgendem beinhaltet:
Erhöhen der Drehzahl von einer oder mehreren Gasturbinentriebwerkskomponenten;
Verändern von Positionen von einer oder mehreren Vorrichtungen mit variabler Geometrie;
Einschalten von einer oder mehreren Heizungen;
Öffnen von einem oder mehreren Verdichter-Bypass-Kanälen; und
Anzeigen von einer oder mehreren Meldungen zum Verlassen einer Partikelquelle.

5. System nach Anspruch 1, ferner umfassend:
eine Vielzahl von zusätzlichen Partikelsensoren (134-3, 134-4, 134-5), wobei jeder zusätzliche Partikelsensor an unterschiedlichen Positionen auf dem Gasturbinentriebwerk angebracht ist, die sich jeweils von der ersten und der zweiten Position unterscheiden, wobei jeder zusätzliche Partikelsensor dazu konfiguriert ist, Eisteilchen an seiner Position zu erfassen und ein zusätzliches dafür charakteristisches Sensorsignal zu liefern,
wobei der Prozessor ferner dazu gekoppelt ist, jedes der zusätzlichen Sensorsignale zu empfangen, und ferner dazu konfiguriert ist, bei Empfang des zusätzlichen Sensorsignals:
Menge und Größe der Eisteilchen an den unterschiedlichen Positionen zu bestimmen; und
auf Basis mindestens der Menge und Größe von Eisteilchen an jeder der unterschiedlichen Position einen Betrag der Eisteilchen zu bestimmen, die sich auf einer oder mehreren zusätzlichen Gasturbinentriebwerkskomponenten angesammelt haben.

6. System nach Anspruch 5, wobei:
die zusätzlichen Turbinentriebwerkskomponenten eine erste Verdichterstufe und eine zweite Verdichterstufe beinhalten.

7. Verfahren (200) zum Bestimmen einer Partikelansammlung in einem Gasturbinentriebwerk (102), wobei die Partikel gefrorene Eisteilchen sind, wobei das Verfahren die folgenden Schritte umfasst:
Erfassen (202) von Eisteilchen an einer ersten Position auf dem Gasturbinentriebwerk und Liefern eines dafür charakteristischen ersten Sensorsignals, wobei sich die erste Position vorgelagert zu einer Gasturbinentriebwerkskomponente befindet;
Erfassen (204) von Eisteilchen an einer zweiten Position auf dem Gasturbinentriebwerk und Liefern eines dafür charakteristischen zweiten Sensorsignals, wobei sich die zweite Position nachgelagert zu der Gasturbinentriebwerkskomponente und der ersten Position befindet;
Verarbeiten des ersten Sensorsignals, um Menge und Größe der Eisteilchen an der ersten Position zu bestimmen (206);
Verarbeiten des zweiten Sensorsignals, um Menge und Größe der Eisteilchen an der zweiten Position zu bestimmen (208);
Bestimmen (210), auf Basis mindestens der Menge und Größe der Eisteilchen an der ersten und der zweiten Position, eines Betrags der Eisteilchen, die sich auf der Gasturbinentriebwerkskomponente angesammelt haben;
Vergleichen (212) des Betrags des Eises, das sich auf der Gasturbinentriebwerkskomponente angesammelten hat, mit einem Schwellenwert; und
Erzeugen (214) eines Signals, wenn der Betrag den Schwellenwert überschreitet;
wobei der erste und der zweite Sensor jeweils optische Sensoren sind; und
wobei die Gasturbinentriebwerkskomponente ein Gebläse (118) ist.

## Revendications

1. Système de détection d'ingestion de particules de moteur à turbine à gaz (100), dans lequel les particules sont des particules de glace gelées, comprenant :
un premier capteur de particules (134-1) monté au niveau d'une première position sur le moteur à turbine à gaz (102), la première position étant située en amont d'un composant de moteur à turbine à gaz (118), le premier capteur de particules étant configuré pour détecter des particules de glace au niveau de la première position et fournir un premier signal de capteur représentatif de celles-ci ;
un deuxième capteur de particules (134-2) monté au niveau d'une deuxième position sur le moteur à turbine à gaz, la deuxième position étant située en aval du composant de moteur à turbine à gaz (118) et de la première position, le deuxième capteur de particules étant configuré pour détecter des particules de glace au niveau de la seconde position et fournir un deuxième signal de capteur représentatif de celles-ci ; et
un processeur (136) couplé pour recevoir le premier signal de capteur et le deuxième signal de capteur, le processeur étant configuré, lors de la réception du premier et du deuxième signal de capteur, pour :
déterminer la quantité et la taille des particules de glace au niveau de la première position ;
déterminer la quantité et la taille des particules de glace au niveau de la deuxième position ;
déterminer, sur la base au moins de la quantité et de la taille des particules de glace au niveau des première et deuxième positions, une quantité de glace accumulée sur le composant de moteur à turbine à gaz ;
comparer (212) la quantité de glace accumulée sur le composant de moteur à turbine à gaz à une valeur seuil ; et
générer (214) un signal lorsque la quantité dépasse la valeur seuil ;
dans lequel le composant de moteur à turbine à gaz est une soufflante (118) ; et
dans lequel les premier et deuxième capteurs sont chacun des capteurs optiques.

2. Système selon la revendication 1, comprenant en outre :
un générateur d'alerte (140) couplé pour recevoir le signal du processeur et configuré, lors de la réception du signal, pour générer une alerte.

3. Système selon la revendication 1, dans lequel le signal lance une ou plusieurs actions pour empêcher ou atténuer une accumulation supplémentaire de particules.

4. Système selon la revendication 3, dans lequel les une ou plusieurs actions incluent un ou plusieurs parmi :
l'augmentation de la vitesse de rotation d'un ou plusieurs composants de moteur à turbine à gaz ;
la variation de positions d'un ou plusieurs dispositifs à géométrie variable ;
l'excitation d'un ou plusieurs éléments chauffants ;
l'ouverture d'un ou plusieurs canaux de dérivation de compresseur ; et
l'affichage d'un ou plusieurs messages pour quitter une source des particules.

5. Système selon la revendication 1, comprenant en outre :
une pluralité de capteurs de particules supplémentaires (134-3, 134-4, 134-5), chaque capteur de particules supplémentaire étant monté au niveau de différentes positions sur le moteur à turbine à gaz qui sont chacune différentes des première et deuxième positions, chaque capteur de particules supplémentaire étant configuré pour détecter des particules de glace au niveau de sa position et fournir un signal de capteur supplémentaire représentatif de celles-ci,
dans lequel le processeur est en outre couplé pour recevoir chacun des signaux de capteurs supplémentaires, et est en outre configuré, lors de la réception du signal de capteurs supplémentaire, pour :
déterminer la quantité et la taille des particules de glace au niveau des différentes positions, et
déterminer, sur la base au moins de la quantité et de la taille des particules de glace au niveau de chacune des différentes positions, une quantité des particules de glace accumulée sur un ou plusieurs composants de moteur à turbine à gaz supplémentaires.

6. Système selon la revendication 5, dans lequel :
les composants de moteur à turbine supplémentaires incluent un premier étage de compresseur et un deuxième étage de compresseur.

7. Procédé (200) pour déterminer l'accumulation de particules dans un moteur à turbine à gaz (102), dans lequel les particules sont des particules de glace gelées, le procédé comprenant les étapes suivantes :
la détection (202) de particules de glace au niveau d'une première position sur le moteur à turbine à gaz et la fourniture d'un premier signal de capteur représentatif de celles-ci, la première position étant située en amont d'un composant de moteur à turbine à gaz ;
la détection (204) de particules de glace au niveau d'une deuxième position sur le moteur à turbine à gaz et la fourniture d'un deuxième signal de capteur représentatif de celles-ci, la deuxième position étant située en aval du composant de moteur à turbine à gaz et de la première position ;
le traitement du premier signal de capteur pour déterminer (206) la quantité et la taille des particules de glace au niveau de la première position ;
le traitement du deuxième signal de capteur pour déterminer (208) la quantité et la taille des particules de glace au niveau de la deuxième position ;
la détermination (210), sur la base au moins de la quantité et de la taille des particules de glace au niveau des première et deuxième positions, d'une quantité de la glace accumulée sur le composant de moteur à turbine à gaz ;
la comparaison (212) de la quantité de glace accumulée sur le composant de moteur à turbine à gaz à une valeur seuil ; et
la génération (214) d'un signal lorsque la quantité dépasse la valeur seuil ;
dans lequel les premier et deuxième capteurs sont chacun des capteurs optiques ; et
dans lequel le composant de moteur à turbine à gaz est une soufflante (118).
